# EUROPÄISCHE PATENTANMELDUNG

(11) **EP 2 500 300 A1**
(43) Veröffentlichungstag der Anmeldung: **19.09.2012**
(21) Anmeldenummer: 12159513.6
(22) Anmeldetag: 14.03.2012
(51) Int. Cl.: B65G 53/60

(54) **Entlüftungsvorrichtung**

(30) Priorität: 15.03.2011 DE 102011001276
(71) Anmelder: Symelt GmbH, 28307 Bremen (DE)
(72) Erfinder: Henke, Andreas, 28309 Bremen (DE)
(74) Vertreter: Kuhnen & Wacker

(57) **Zusammenfassung**

Die Entlüftungsvorrichtung (12) weist ein Rohr (14) mit wenigstens einem oberen Abschnitt (16) mit einer Zuführöffnung (18) und einem Druckmedlumablassmittel (26), einem unteren Abschnitt (20) mit einer Abgabeöffnung (22) und einem mittleren Abschnitt (24), welcher den oberen Abschnitt (16) mit dem unteren Abschnitt (20) verbindet, auf, wobei der obere Abschnitt (16) einen größeren Querschnitt aufweist als der untere Abschnitt (20).

## Beschreibung

Die Erfindung betrifft eine Enttüftungsvorrichrung, welche zum Entlüften eines Druckmediums verwendet wird, eine Anordnung der Entlüftungsvorrichtung an einem Tank sowie ein Verfahren zum Zuführen eines Granulats zu dem Tank vermittels einer Zuführleitung und der Entlüftungsvorrichtung.

Eine solche Entlüftungsvorrichtung ist aus der DE 699 31 824 T2 bekannt.

Derartige Entlüftungsvorrichtungen werden bei pumpfähigen Stoffen eingesetzt, insbesondere beim Bereitstellen von Heißkleber für Heißklebeeinrichtungen. Die Heißklebeeinrichtung ist in diesem Fall eine einen Tank aufweisende Verarbeitungsstation. Der Heißkleber wird dabei als Schüttgut, nämlich in Form von Granulat, von einem Reservoirtank zu dem Tank der Verarbeitungsstation, in dem das Granulat geschmolzen wird, transportiert, wie aus der EP 2 241 867 A1 bekannt ist. Darin muss jedoch ein Schließstopfen innerhalb der Entlüftungsvorrichtung beim Zuführen des pumpfähigen Stoffes gesondert betätigt werden, um selbiges in den Tank einzuführen.

Die Anwendung und Ausbildung einer solchen Entlüftungsvorrichtung wird in der DE 699 31 824 T2 diskutiert. Darin werden derartige pumpfähige Stoffe von einem Vorratsbehälter über eine Versorgungsleitung vermittels eines Verteilungsmittels, mit anderen Worten einer Entlüftungsvorrichtung, in einen Heizbehälter befördert. Das die pumpfähigen Stoffe befördernde Druckmedium entweicht hierbei durch die in dem Verteilungsmittel ausgebildeten Löcher. Der Nachteil der in dieser Schrift enthaltenden Lehre ist hingegen, dass der pumpfähige Stoff beim Austritt aus dem Verteilmittel mit der Pumpgeschwindigkeit, also der Geschwindigkeit, mit welcher das Granulat durch die Versorgungsleitung befördert wird, in den Heizbehälter eintritt. Hierdurch entstehen unerwünschte Spritzer. Ferner ist nicht sichergestellt, dass keine oder lediglich geringe Mengen des Druckmediums in den Heizbehälter gelangen. Darüber hinaus weist die Lehre der Schrift keine zufriedenstellende Lösung für unerwünschte Wärmebrücken auf, welche zwischen dem heißen Heizbehälter und der Versorgungsleitung auftreten.

Neben der vorstehenden Schrift befasst sich auch die DE 203 13 349 U 1 mit der Beschickung eines granulatartigen Klebstoffs aus einem Reservoir über einen Schlauch bis zu einem Einlassstutzen, welcher oberhalb eines Schmelztanks angeordnet ist und geöffnet bzw. verschlossen werden kann. Dabei wird unter Zuhilfenahme einer Pumpe, im vorliegenden Fall eine Lanze nach dem Venturi-Prinzip, der granulatartige Klebstoff durch den Schlauch bis zu dem geschlossenen Einlassstutzen gepumpt. Anschließend wird nach Ausschalten der Pumpe der Einlassstutzen geöffnet und der vor dem Einlassstutzen befindliche granulatartige Klebstoff fällt mittels der Schwerkraft in den Schmelztank. Hierdurch muss die Pumpe jedoch während jedes einzelnen Beschickungsvorgangs ausgeschaltet werden, um die Beschickung zu beenden.

Ausgehend vom Stand der Technik liegt daher der Erfindung die Aufgabe zugrunde, eine Entlüftungsvorrichtung zu schaffen, welche einen Eintritt des Druckmediums in den Tank verhindert, keine Wärmebrücken aufweist und ein zu beförderndes Granulat mit möglichst geringer Geschwindigkeit in den Tank befördert.

Diese Aufgabe wird durch eine Entlüftungsvorrichtung mit den Merkmalen des Anspruchs 1 gelöst, welcher dadurch gekennzeichnet ist, dass die Entlüftungsvorrichtung ein Rohr mit wenigstens einem oberen Abschnitt mit einer Zuführöffnung und einem Druckmediumablassmittel, einem unteren Abschnitt mit einer Abgabeöffnung und einem mittleren Abschnitt, der den oberen Abschnitt mit dem unteren Abschnitt verbindet, aufweist, wobei der obere Abschnitt einen größeren Querschnitt aufweist als der untere Abschnitt.

Dadurch wird mit Hilfe der unterschiedlichen Querschnittsausbildung des oberen bzw. unteren Abschnitts eine Stauung eines zu transportierenden, von der Zuführöffnung eintretenden Granulats für kurze Zeit erreicht, wodurch das Druckmedium durch das Druckmediumablassmittel auf vorteilhafte Weise entweichen kann. Nach kurzer Zeit löst sich das im mittleren Abschnitt gestaute Granulat wieder und wird durch die Abgabeöffnung abgeben. Somit kann auf einfache konstruktive Weise erreicht werden, dass das Druckmedium durch das Druckmediumablassmittel entweicht und das zu befördernde Granulat durch die Abgabeöffnung abgegeben wird.

Vorteilhafte Weiterbildungen der erfindungsgemäßen Entlüftungsvorrichtung sind Gegenstand der abhängigen Ansprüche.

So kann das Druckmediumablassmittel wenigstens teilweise im oberen Abschnitt in einer Umfangsfläche des Rohrs als Sieb ausgebildet sein. Hierdurch lässt sich der obere Abschnitt mit geringem konstruktiven Aufwand bereitstellen.

Vorteilhaft kann die Entlüftungsvorrichtung derart angeordnet sein, dass eine einer Transportrichtung verlaufende Mittelachse des Rohrs im Wesentlichen parallel zu der Gravitationsrichtung angeordnet ist. Hierdurch kann vorteilhaft die Entlüftungsvorrichtung derart oberhalb eines Tanks angeordnet sein, dass das Granulat unter Einfluss der Schwerkraft, d.h. ohne weitere, insbesondere konstruktiver, Maßnahmen, drucklos in den Tank fällt. Die Entlüftungsvorrichtung kann jedoch auch derart angeordnet sein, dass die einer Transportrichtung verlaufende Mittelachse des Rohrs so verläuft, dass das Rohr als Rutsche dient, um das zu befördernde Granulat abzugeben.

Gemäß einem weiteren Aspekt der vorliegenden Erfindung kann das Rohr der Entlüftungsvorrichtung parallel zur Transportrichtung bewegbar, insbesondere verschiebbar, angeordnet werden. Unter parallel zur Transportrichtung kann im Sinne der Erfindung in und gegen die Transportrichtung verstanden werden. Durch diese Bewegbarkeit des Rohrs wird erreicht, dass das Rohr, vor dem Zuführen des Granulats, von einer Ausgangsposition in eine Befüllposition geführt wird und nach dem Beenden des Zuführens wird das Rohr wieder von der Befüllposition in die Ausgangsposition positioniert. Die Ausgangsposition ist so bestimmt, dass sie von der Abdeckfläche des Tanks beabstandet ist. Somit werden auf vorteilhafte Weise unerwünschte Wärmebrücken zwischen dem heißen Tank und dem Rohr bzw. einer Zuführleitung vermieden. Derartige Wärmebrücken führen zu einem unerwünschten vorzeitigen Schmelzen des Granulats und somit neben der schädigenden Veränderung der Eigenschaften des Granulats auch zum Ablagern des geschmolzenen Granulats an der Rohrinnenseite, was das Rohr verstopfen bzw. blockieren lassen kann.

Eine besonders vorteilhafte Weiterbildung der Bewegbarkeit des Rohrs kann erreicht werden, wenn der obere Abschnitt an der Zuführleitung parallel zur Transportrichtung verschiebbar angeordnet ist. Dadurch wird der obere Abschnitt des Rohrs teleskopartig an die Zuführleitung bewegbar verbunden und somit wird das Bewegen des Rohrs von der Ausgangsposition zu der Befüllposition mit einfachen Mitteln umgesetzt.

Darüber hinaus kann die Entlüftungsvorrichtung einen Verschiebemechanismus aufweisen, welcher das Rohr parallel zur Transportrichtung verschiebt. Dafür ist jedoch keine zwingende Ausbildung des Rohrs mit dem Druckmediumablassmittel und den drei Abschnitten nötig, d.h. es kann auch ein Rohr verwendet werden, dass entlang seiner kompletten Länge einen konstanten Querschnitt aufweist. Der Verschiebemechanismus kann ein Druckmittelzylinder, wie z.B. ein Pneumatikzylinder, Hydraulikzylinder, etc., ein elektromagnetisches bzw. elektromechanisches Betätigungsorgan, wie z.B. ein Spindeltrieb, etc., oder dergleichen sein. Unter Zuhilfenahme eines derartigen Verschiebemechanismus ist das Bewegen des Rohrs nach Erhalten eines Signals vollautomatisch in und gegen Transportrichtung bewegbar, so dass beim Einsatz der Entlüftungsvorrichtung an einem heißen Tank keine für eine Person gefährlichen, manuellen Tätigkeiten ausgeführt werden müssen. Darüber hinaus wird durch Verwendung eines solchen Verschiebemechanismus gänzlich jede manuelle Tätigkeit vermieden, wodurch die Arbeitskraft körperlich entlastet wird.

Gemäß einem weiteren Aspekt der vorliegenden Erfindung kann das Rohr einen kreisförmigen Querschnitt aufweisen. Hierdurch kann eine verbesserte Strömung des Granulats erzielt werden.

Ferner kann der untere Abschnitt im Bereich der Abgabeöffnung ein Prallblech aufweisen. Demzufolge wird nach der Stauung des Granulats im mittleren Abschnitt selbiges kurz vor dem Austritt aus der Abgabeöffnung vermittels des Prallblechs nochmals effektiv abgebremst werden, sofern das Granulat nicht schon im mittleren Abschnitt ausreichend gebremst wird, bevor es in den Tank eintritt. Ferner wird eine wirksame Verteilung des Granulats beim Zuführen erreicht.

Gemäß einem weiteren Aspekt der vorliegenden Erfindung kann der mittlere Abschnitt trichterförmig verjüngt sein. Insofern wird eine verbesserte Stauung des Granulats in diesem mittleren Abschnitt erzielt, da der Trichter, mit anderen Worten die schräge Ausbildung, das auftreffende Granulat wirksam von der Oberfläche des mittleren Abschnitts zur Mittelachse des Rohrs prallen lässt. Hierdurch tritt unter Berücksichtigung der beförderten Granulatmenge bzw. des Querschnitts des oberen sowie unteren Abschnitts rasch eine wirksame Stauung des Granulats im mittleren Abschnitt ein.

Gemäß der erfindungsgemäßen Anordnung der Entlüftungsvorrichtung an einem Tank kann selbiger eine Abdeckfläche mit einer Einfüllöffnung im Bereich der Abdeckfläche aufweisen. Die Entlüftungsvorrichtung ist derart oberhalb der Abdeckoberfläche positioniert, dass die Entlüftungsvorrichtung durch die Einfüllöffnung einführbar ist. Dadurch kann auf vorteilhafte Weise die Entlüftungsvorrichtung alternierend in den Tank hinein und heraus bewegt werden, d.h. von dem Ausgangspunkt zu dem Befüllpunkt bzw. von dem Befüllpunkt zu dem Ausgangspunkt. Darüber hinaus wird beim Einführen in den Tank vorteilhaft erreicht, dass kein Granulat beim Zuführen desselben außerhalb des Tanks verschüttet wird.

Vorteilhaft kann wenigstens eine erste in der Fläche, insbesondere kreuzweise, geschlitzte elastische Platte an der Einfüllöffnung angeordnet sein. Hierdurch kann auf vorteilhafte Weise der Tank mit Hilfe der elastischen Platte abgedeckt werden, wodurch ein Aufsteigen sowie Austreten von schädlichen Dämpfen und Gerüchen, welche unter anderem beim Schmelzen des granulatartigen Klebstoffs entstehen, in die Umgebung wirksam verhindert werden. Darüber hinaus können die Dämpfe das Rohr schädigen oder eine schmierige Schicht auf dem Rohr ausbilden. Die elastische Platte ist jedoch nicht nur auf kreuzweise Schlitze beschränkt, sie kann ferner auch geradlinig, sternförmig oder dergleichen geschlitzt sein.

Ein Weiterbildung der vorstehenden Ausführung kann darin liegen, dass eine erste elastischen Platte derart oberhalb einer zweiten elastischen Platte angeordnet ist, dass ein, insbesondere kreuzweise ausgebildeter, Schlitz der zweiten Platte in Bezug auf dem, insbesondere kreuzweise ausgebildeten, Schlitz der ersten Platte, um insbesondere 45 °, versetzt ist. Mit der übereinanderliegenden Anordnung der beiden elastischen Platten wird der Austritt der Dämpfe noch wirksamer verhindert, da die Schlitze versetzt angeordnet sind und somit von der jeweils anderen elastischen Platte abgedeckt ist. Eine derartige Anordnung der Abdeckung bzw. Abdichtung hat besonders bei Stoffen mit giftigen Dämpfen eine erhebliche Bedeutung. Es sind jedoch auch weitere Versetzungen mit beliebigen Winkeln möglich.

Ferner kann der Verschiebemechanismus an einem Gehäuse angeordnet sein. Hierdurch wird auf vorteilhafte Weise das Gehäuse zum Abstützen des Verschiebemechanismus verwendet und somit wirksam verhindert, dass sich der Verschlebemechanismus an dem heißen Tank abstützt, wodurch der Verschiebemechanismus geschädigt werden könnte.

Beim Einführen des in der Ausgangsposition befindlichen Rohrs in die Einlassöffnung vermittels des Verschiebemechanismuses dringt das Rohr beginnend mit der Abgabeöffnung durch den Schlitz der wenigstens einen elastischen Platte in den Tank, d.h. in die Befüllposition, ein. Die wenigstens eine elastische Platte schmiegt bzw. drückt sich unter Berücksichtigung ihrer Elastizität, Trägheitsmoment, Steifigkeit, etc. an die Außenseite des unteren Abschnitts des Rohrs an und verhindert somit wirksam, dass Dämpfe und Gerüche aus dem Tank austreten können. Zumindest wird das Freisetzen dieser Dämpfe stark vermindert. Ferner kann sich die wenigstens eine elastische Platte in Abhängigkeit der Befüllposition an den mittleren bzw. oberen Abschnitt anschmiegen. Nach dem Zuführen des Granulats in den Tank wird das Rohr wieder durch den Schlitz der wenigstens einen elastischen Platte in die Ausgangsposition bewegt. Dabei bleiben die wenigstens eine elastische Platte solange an dem Rohr angeschmiegt bis das Rohr nicht mehr mit der wenigstens einen elastischen Platte in Kontakt steht. Wenn das Rohr nicht mehr mit dem Rohr in Kontakt steht, schließt sich die wenigstens eine elastische Platte sofort wieder, d.h. der Schlitz bzw. die wenigstens eine elastische Platte nimmt wieder ihre Gestalt vor dem Einführen des Rohrs durch die Schlitze ein und die Einlassöffnung ist wieder verschlossen. Durch diesen Vorgang kann effektiv das Austreten von Dämpfen und Gerüchen verhindert oder mindestens stark herabgesetzt werden.

Gemäß einem weiteren Aspekt der vorliegenden Erfindung kann das Gehäuse die Entlüftungsvorrichtung umschließen und das Gehäuse wenigstens eine Austrittsöffnung mit einem Filter aufweisen. Auf diese Weise wird das von dem Druckmediumablassmittel entweichende Druckmedium wirksam gefiltert, wodurch einer immer strengeren Feinstaubbeschränkung Rechnung getragen wird.

Gemäß des erfindungsgemäßen Verfahrens zum Zuführen eines Granulats zu dem Tank vermittels der Zuführleitung und der Entlüftungsvorrichtung nach einem der Ansprüche 1 bis 9 kann die Beschickung mit den nachfolgend genannten Schritten besonders vorteilhaft ausgeführt werden.

Zunächst wird das Rohr von der Ausgangsposition in Transportrichtung durch wenigstens eine mit einem, insbesondere kreuzweisen, Schlitz ausgebildete elastische Platte vermittels eines ein Signal empfangenden Verschiebemechanismuses in eine Befüllposition verschoben. Hierdurch wird erreicht, dass das Rohr lediglich beim Zuführen des Granulats innerhalb bzw. in die Nähe des heißen Tanks gelangt und somit wirksam unerwünschte Wärmebrücken beim Betrieb vermieden werden können.

Anschließend wird das mit Hilfe eines Druckmediums beförderte Granulat von der Zuführleitung in die Entlüftungsvorrichtung zugeführt, wobei sich das Granulat im mittleren Abschnitt durch die verjüngende Ausbildung derart staut, dass das Granulat befördernde Druckmedium einen derartigen Staudruck aufbaut, dass das Druckmedium die Bewegungsrichtung umkehrt. Die Bewegungsrichtung des strömenden Druckmediums ist dadurch entgegengesetzt der Transportrichtung des Granulats. Hierdurch wird durch den verjüngenden mittleren Abschnitt das Granulat auf eine einfache Weise gestoppt bzw. verlangsamt und zugleich wirksam dem Druckmedium eine Bewegungsumkehrung aufgezwungen, wodurch vermieden wird, dass das Druckmedium in den Tank strömt.

Das nach einer Bewegungsumkehr strömende Druckmedium entweicht aus dem Rohr durch das im oberen Abschnitt ausgebildete Druckmediumablassmittel. Auf diese vorteilhafte Weise wird sichergestellt, dass das Druckmedium, ohne in den Tank zu strömen, aus dem Rohr entweichen kann. Dadurch kann wirksam verhindert werden, dass das Druckmedium den Inhalt, insbesondere ein darin enthaltenes geschmolzenes Granulat, unerwünscht abkühlt, wodurch eine erhöhte Energiezufuhr zu dem Tank nötig ist, um das geschmolzene Granulat bei einer gewünschten Temperatur beizubehalten.

Nach oder während dem Entweichen des Druckmediums wird das gestaute Granulat durch Lösen des Granulats auf der Abgabeöffnung zugewandten Seite aus dem Rohr durch die in dem unteren Abschnitt ausgebildete Abgabeöffnung vermittels der Schwerkraft abgegeben. Das Granulat fällt somit in den Tank.

Abschließend wird das Rohr nach Zuführen des Granulats von der Befüllposition entgegen der Transportrichtung vermittels eines ein Signal empfangenden Verschiebemechanismuses in die Ausgangsposition verschoben. Dadurch wird sichergestellt, dass keine Wärmebrücken während des Betriebs der Heißklebeeinrichtung entstehen.

Zusätzlich ist es möglich, das von den Löchern in den Innenraum des Gehäuses austretende Druckmedium, während dem Austritt aus dem Innenraum des Gehäuses in die Umgebung, vermittels der mit einem Filter ausgebildeten Austrittsöffnung zu filtern.

Die Erfindung wird nachfolgend anhand von beispielhaften Ausführungsformen unter Bezugnahme auf die angefügte Zeichnung beschrieben. Hierbei zeigt:
- Fig. 1: eine im Querschnitt kreisförmige Zuführleitung in einer schematischen Schnittansicht;
- Fig. 2: eine in einem Gehäuse integrierte Entlüftungsvorrichtung mit einem Druckmediumablassmittel und einem verjüngendem Rohr in einer schematischen perspektivischen Ansicht;
- Fig. 3a: die in das Gehäuse integrierte Entlüftungsvorrichtung gemäß Fig. 2 in einer schematischen Seitenansicht;
- Fig. 3b: die in das Gehäuse integrierte Entlüftungsvorrichtung gemäß Fig. 2 in einer schematischen perspektivischen Ansicht;
- Fig. 4: elastischen Platten für die Entlüftungsvorrichtung gemäß Fig. 2 in einer schematischen Draufsicht;
- Fig. 5: eine Anordnung zweier elastischer Platten für die Entlüftungsvorrichtung gemäß Fig. 2 in einer Schnittansicht;
- Fig. 6: das Rohr für die Entlüftungsvorrichtung gemäß Fig. 2 in Befüllposition in einer schematischen Schnittansicht; und
- Fig. 7: eine Entlüftungsvorrichtung gemäß Fig. mit geschlossenem Gehäuse in einer schematischen perspektivischen Ansicht.

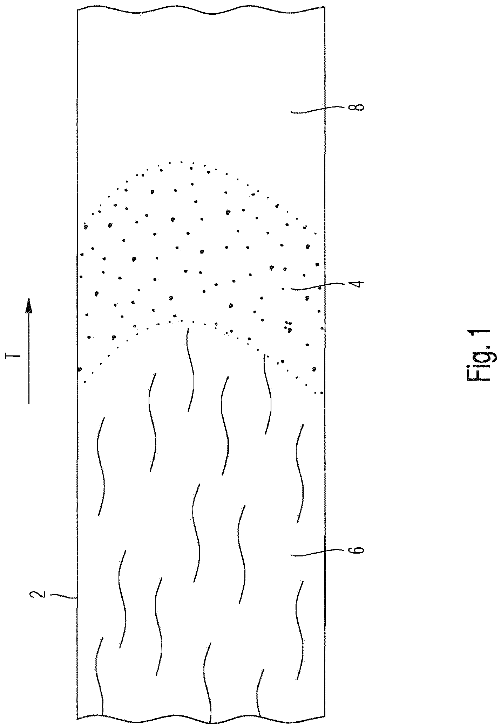

Fig. 1 zeigt eine im Querschnitt kreisförmige Zuführleitung 2 der vorliegenden Erfindung in einer schematischen Schnittansicht. Hierbei soll beispielhaft das Befördern eines Granulats 4 durch eine Zuführleitung 2 vermittels eines Druckmediums 6 erläutert werden. Die Transportrichtung T der Zuführleitung 2 verläuft horizontal in Richtung des Granulats 4. Das Granulat 4 wird unter Zuhilfenahme eines von einer nicht dargestellten Pumpe unter Druck gesetzten Druckmediums 6 befördert. Hierbei bildet sich ein Strömungsbild, ähnlich wie in Fig. 1 gezeigt, des Druckmediums 6, des Granulats 4 sowie des verdrängten Mediums 8 aus. Im Rahmen der Erfindung bietet sich als Druckmedium 6 bzw. verdrängtes Medium 8 Luft an.

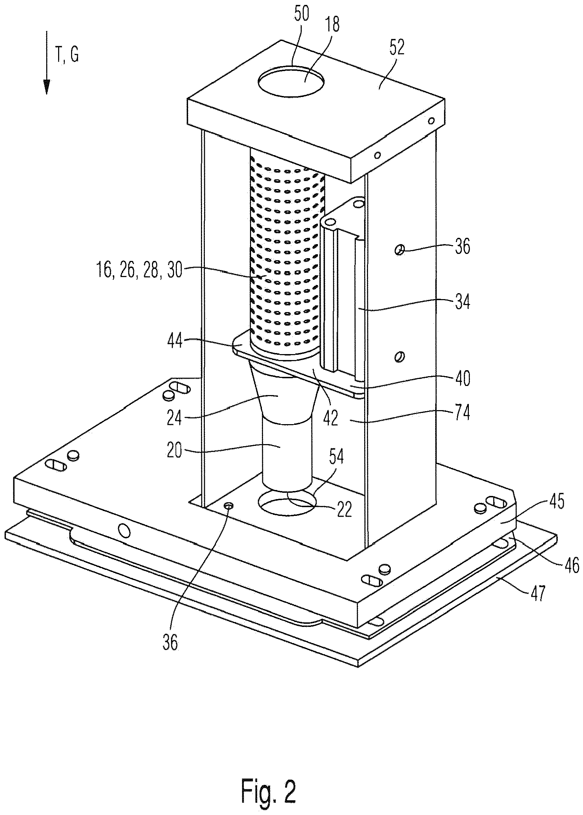

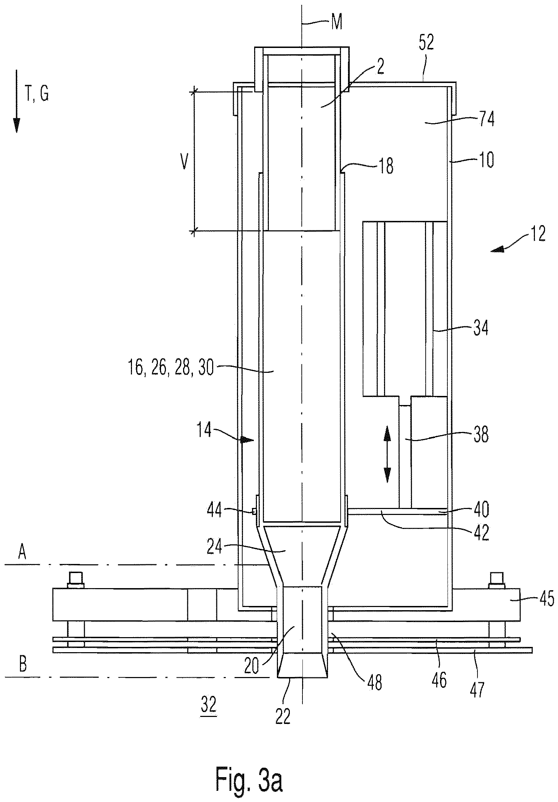

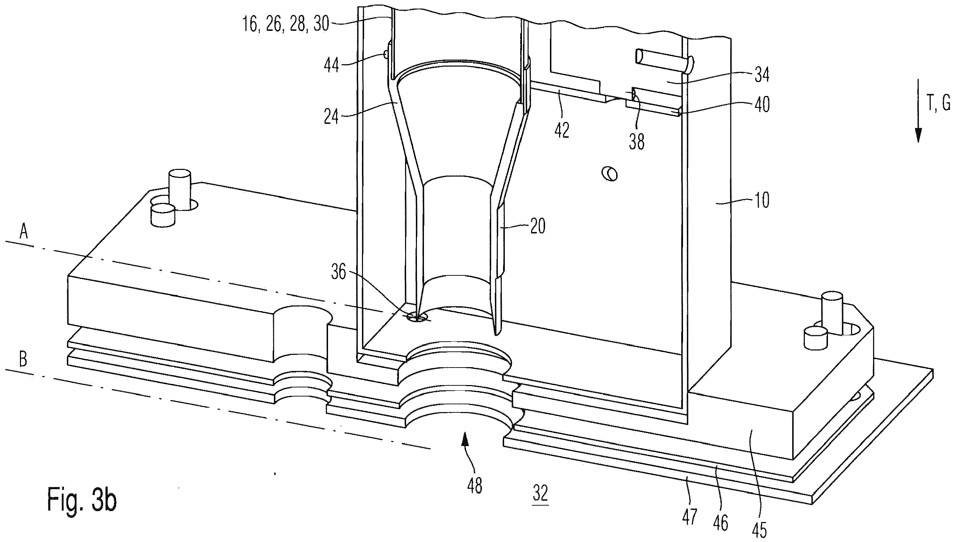

Fig. 2 zeigt eine in einem Gehäuse 10 integrierte Entlüftungsvorrichtung 12 in einer schematischen perspektivischen Ansicht und Fig. 3a zeigt die in das Gehäuse 10 integrierte Entlüftungsvorrichtung 12 in einer schematischen Seitenansicht gemäß einem Ausführungsbeispiel der vorliegenden Erfindung. Das im Querschnitt kreisförmige Rohr 14 ist mit einem oberen Abschnitt 16 mit einer Zuführöffnung 18, einem unteren Abschnitt 20 mit einer Ausgabeöffnung 22 und einem mittleren Abschnitt 24, welcher den oberen Abschnitt 16 mit dem unteren Abschnitt 20 verbindet, ausgebildet. Der in der in Fig. 2 und 3 gezeigte obere Abschnitt 16 weist dabei einen größeren Querschnitt als der unter Abschnitt 20 auf und deren verbindende mittlere Abschnitt 24 ist dabei trichterförmig verjüngt ausgebildet. Darüber hinaus weist der obere Abschnitt 16 ein Druckmediumablassmittel 26 auf, das bei dieser Ausführungsform als Sieb 28 in einer Umfangsfläche 30 des Rohrs 14 ausgebildet ist, so dass das Granulat 4 befördernde Druckmedium 6 entweichen kann. Die Öffnungen bzw. Löcher des Siebs 28 sind demzufolge kleiner als das Granulat 4 gestaltet, so dass lediglich das Druckmedium 6 entweichen kann. Das Rohr 14 ist derart angeordnet, dass eine in Transportrichtung T verlaufende Mittelachse M des Rohrs 14 im Wesentlichen parallel zu der Gravitationsrichtung G ist.

Darüber hinaus ermöglicht das Sieb 28, dass das in Fig. 1 gezeigte verdrängte Medium 8, welches sich in der Zuführleitung 2 stromabwärts des Granulats 4 befindet, beim Zuführen des Granulats 4 in die Entlüftungsvorrichtung 12 durch das Sieb 28 entweicht. Dadurch kann ebenfalls vermieden werden, dass nur geringe Mengen an verdrängtem Medium 8 in einen Tank 32 strömt.

In Fig. 2 ist ferner ein Verschiebemechanismus 34, im vorliegenden Fall ein Pneumatikzylinder, an das Gehäuse 10 mit einem geeigneten Befestigungsmittel 36 befestigt. Das Befestigungsmittel 36 kann im Sinne der Erfindung eine Schraube, Niet oder dergleichen sein. An einem Bolzen 38 des Verschiebemechanismuses 34 ist ein erstes Ende 40 eines Flanschs 42 angeordnet und somit wird der Flansch 42 mit der durch die von dem Verschiebemechanismus 34 ausgeübte translatorische Bewegung verschoben. Ein zweites Ende 44 des Flansches 42 umfasst das Rohr 14 am oberen Abschnitt 16, so dass die von dem Verschiebemechanismus 34 ausgeübte translatorische Bewegung über den Flansch 42 auf das Rohr 14 übertragen wird. Beide Enden 40, 44 des Flansches 42 können jeweils an das Rohr 14 bzw. an den Bolzen 38. des Verschiebemechanismuses 34 geschraubt, gelötet, geklebt, genietet, geschweißt, formschlüssig, kraftschlüssig oder dergleichen befestigt sein.

Das Rohr 14 der Entlüftungsvorrichtung 12 befindet sich in Fig. 3a in einem Bereich zwischen einer Ausgangsposition A, bei der das Rohr 14, während des Betriebs einer nicht gezeigten Heißklebeeinrichtung, ohne Zuführen des Granulats 4 positioniert wird, und einer Befüllposition B, bei der das Rohr 14 während des Zuführens des Granulats 4 positioniert wird.

Die Abdeckfläche wird in Fig. 2 als eine Thermoplatte 45 ausgebildet. Das Gehäuse 10 ist auf die Thermoplatte 45 mit einem weiteren Befestigüngsmittel 36 derart angeordnet, dass die Entlüftungsvorrichtung 12 derart oberhalb der Thermoplatte 45 positioniert ist, dass die Entlüftungsvorrichtung 12 durch eine in der Thermoplatte 45, in einer Schutzplatte 46 und in einer Federplatte 47 ausgebildeten Einfüllöffnung 48 einführbar ist. Das Gehäuse 8 weist dabei zudem bei der an der Thermoplatte 45 anliegenden Seite eine solche erste Gehäuseöffnung 50 auf, so dass ein Einführen der Entlüftungsvorrichtung 12 ohne Probleme durchgeführt werden kann.

In Fig. 3a ragt ferner die Zuführleitung 2, welche in Fig. 2 nicht gezeigt ist, durch eine in die Abdeckung 52 des Gehäuses 10 ausgebildete zweite Gehäuseöffnung 54. Die Zuführleitung 2 und die zweite Gehäuseöffnung 54 sind derart zueinander angeordnet, dass die Zuführleitung 2 mit dem oberen Abschnitt 16 verschiebbar verbunden werden kann. Somit stellt die Zuführleitung 2 mit dem oberen Abschnitt 16 eine teleskopartige Verbindung dar. Hierbei ist ein Querschnitt der Zuführleitung 2 kleiner als der Querschnitt des oberen Abschnitts 16 des Rohrs 14, wodurch sich das in Transportrichtung T befördernde Granulat 4 am Übergang von der Zuführleitung 2 zu dem oberen Abschnitt 16 nicht sperrt. Der Verschiebeabschnitt V liegt vollständig innerhalb des Gehäuses 10.

In Fig. 3b ist die in das Gehäuse 10 integrierte Entlüftungsvorrichtung 12, welche in der Ausgangsposition A positioniert ist, in einer schematischen perspektivischen Ansicht dargestellt. Das Gehäuse 10 ist dabei auf der Oberseite der Thermoplatte 45 formgenau eingepasst und mit dem Befestigungsmittel 36 an der Thermoplatte 45 verbunden. Die innerhalb des Gehäuses 10 befindliche Entlüftungsvorrichtung 12 ist in der Ausgangsposition A positioniert. Die dargestellten Thermoplatte 45, Schutzplatte 46 und Federplatte 47 sind voneinander beabstandet und weisen jeweils eine übereinanderliegende Einlassöffnung 48 auf, so dass der untere Abschnitt 14 des Rohrs 20 bzw. das Rohr 20 durch die Einlassöffnung 48 bewegt werden kann.

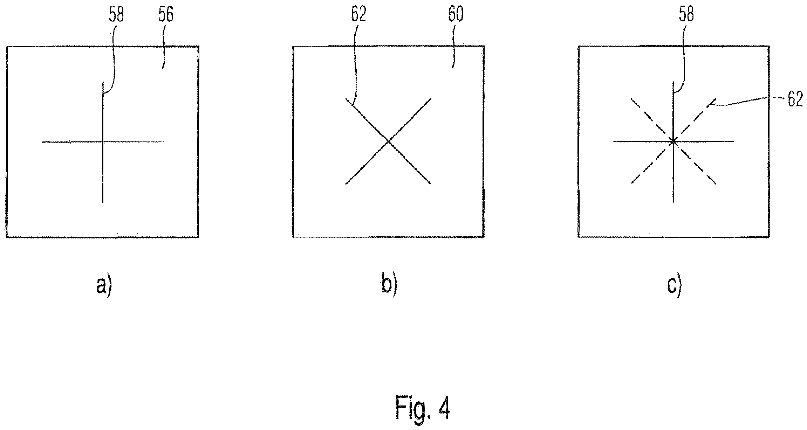

In Fig. 4 sind elastische Platten in einer schematischen Draufsicht dargestellt. Unter a) ist eine erste elastische Platte 56 mit einem ersten kreuzweise ausgebildeten Schlitz 58 gezeigt, unter b) ist eine zweite elastische Platte 60 mit einem zweiten kreuzweise ausgebildeten Schlitz 62 gezeigt, wobei der zweite Schlitz um 45° im Vergleich zu dem ersten kreuzweise ausgebildeten Schlitz 58 der ersten elastischen Platte 60 versetzt ist, und unter c) ist eine übereinanderliegende Anordnung der ersten elastischen Platte 56 und der zweiten elastischen Platte 60 gezeigt, wobei die durchgezogenen Linien den ersten Schlitz 56 der ersten elasteichen Platte 56 und die gestrichelten Linien den zweiten Schlitz 62 der darunterliegenden zweiten elastischen Platte 60 zeigt. Durch diese versetzte Anordnung des ersten und zweiten Schlitzes 58, 62 werden diese durch die jeweils andere elastische Platte 60, 56 abgedeckt bzw. verschlossen.

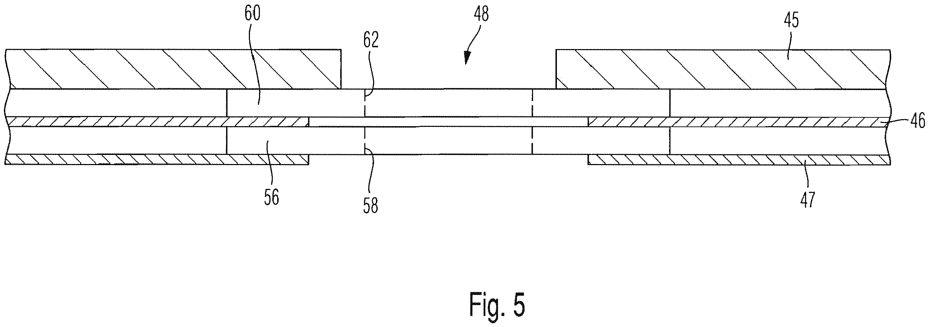

Die elastischen Platten 56, 60 können aus Kautschuk, Synthesekautschuk oder dergleichen bestehen. Die Dicke der elastischen Platten 56, 60 unter Berücksichtigung des Materials ist derart gestaltet, dass sie eine bestimmte Elastizität, Trägheitsmoment, Steifigkeit aufweisen, um beim Ausführen des Rohrs 14 aus dem Tank 32 wieder die in Fig. 5 dargestellte Position einzunehmen.

Die elastischen Platten 56, 60 sind, wie in Fig. 5 dargestellt, im Bereich der Einfüllöffnung 48 angeordnet und mit der Schutzplatte 46 voneinander beabstandet. Die Federplatte 47 drückt mit einem nicht gezeigten Spannmechanismus die elastische erste elastische Platte 56, die Schutzplatte 46 sowie die zweite elastische Platte 60 derart gegen die Unterseite der Thermoplatte 45, dass die beiden elastischen Platten 56, 60 beim Einführen des Rohrs 14 in die Einfüllöffnung 48 nicht mit in den Tank 32 gezogen bzw. gedrückt werden. Somit wird die Einfüllöffnung 48 während des Zuführens von Granulat 4 gegen austretende Dämpfe oder Gerüche wirksam abgedichtet.

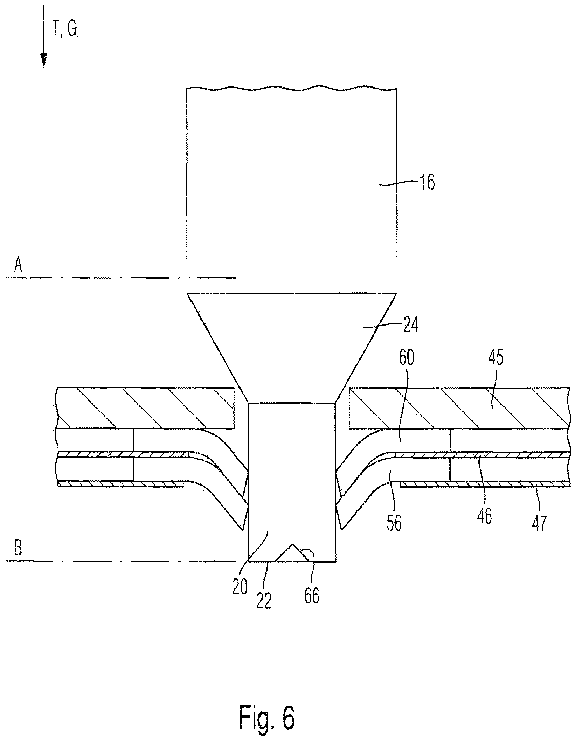

In Fig. 6 ist das Rohr 14 in Befüllposition B in einer schematischen Schnittansicht dargestellt. Das Rohr 14 durchdringt die beiden elastischen Platten 56, 60 derart, dass sie sich ebenso in die Transportrichtung T mitbewegen können und sich an das Rohr 14 anschmiegen. An dem unteren Abschnitt 20 des Rohrs 14 im Bereich der Abgabeöffnung 22 ist mittig zu dem senkrecht zur Transportrichtung T gelegenen Querschnitt ein Prallblech 66 angeordnet. Das Prallblech 66 dient zum einen zum Verlangsamen des einströmenden Granulats 4 und zum anderen zum Verteilen des einströmenden Granulats 4.

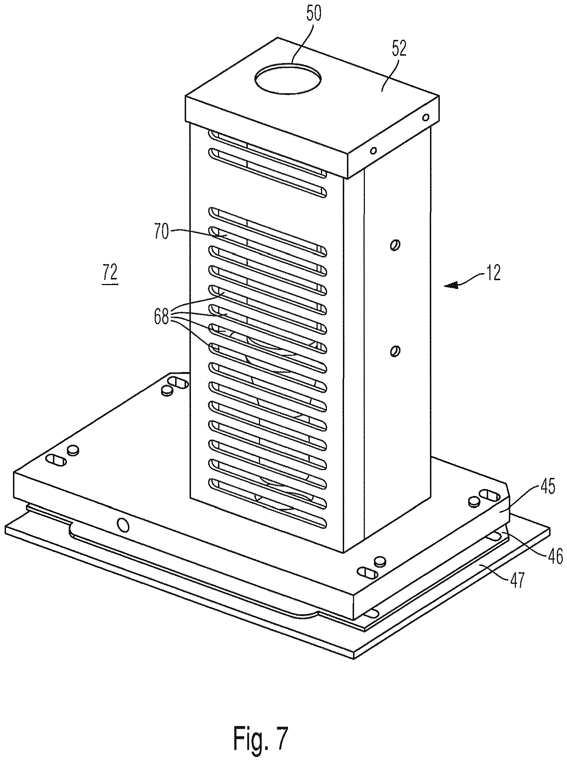

In Fig. 7 ist eine auf einer Thermoplatte 45 angeordnete Entlüftungsvorrichtung 12 mit geschlossenem Gehäuse 10 in einer schematischen perspektivischen Ansicht dargestellt. Das geschlossene Gehäuse 10 weist mehrere horizontal erstreckende Austrittsöffnungen 68 mit darauf angeordneten Filtern 70 auf, welche das von dem Sieb 28 austretendes Druckmedium 6 vor dem Austritt in die Umgebung 72 filtert und somit den von dem Granulat 4 stammenden Staub zurückhält. Der Übersicht halber wurde in Fig. 7 ebenso wie bei Fig. 2 auf die Zuführleitung 2 verzichtet.

Die Erfindung lässt neben den erläuterten Ausführungsformen weitere Gestaltungsansätze zu.

Obwohl vorstehend unter dem Druckmedium 6 bzw. dem verdrängten Medium 8 Luft verstanden wird, können auch Flüssigkeiten oder Gase verwendet werden.

Obgleich das zu befördernde Material vorstehend als Granulat 6 bezeichnet ist, kann darunter auch Pellets, Schüttgüter oder dergleichen verstanden werden.

Das Rohr 14 kann nicht nur im Querschnitt senkrecht zur Transportrichtung T kreisförmig ausgebildet sein, sondern kann auch eine ovale, dreieckige, viereckige oder vieleckige Querschnittsform aufweisen. Ferner können die einzelnen Abschnitte 16, 20, 24 unterschiedliche Querschnittsformen aufweisen.

Auch wenn der mittlere Abschnitt in den vorstehenden Ausführungsformen trichterförmig ausgebildet ist, kann er auch konvex, konkav oder dergleichen ausgebildet sein.

Obwohl in dem Rohr lediglich eine Verjüngung durch den mittleren Abschnitt 24 ausgebildet ist, sind auch mehrere Verjüngungen möglich, um das strömende Granulat 4 mehrfach abzubremsen bzw. zu stauen.

Der obere Abschnitt 16 ist vorstehend als Sieb 28 ausgebildet, jedoch sind zahlreiche andere Ausbildungen, wie z.B. Schlitze, Öffnungen, welche den Austritt des Druckmediums 6 in einen Innenraum 74 bzw. die Umgebung 72 in eine bestimmte Richtung unterstützen, oder dergleichen, möglich.

Obwohl der Verschiebemechanismus 34 an das Gehäuse 10 angeordnet ist, ist auch denkbar den Verschiebemechanismus 34 an andere Komponenten, wie z.B. an die Zuführleitung 2, anzuordnen.

Im Gegensatz zu der in Fig. 2 und 3 dargestellten Ausführungsform kann das Rohr 14 auch ohne Verwendung eines Flansches 42, insbesondere verschiebbar, bewegt werden.

Sämtliche Befestigungen bzw. Anordnungen von Komponenten mit dem Befestigungsmittel 36 können auch geklebt, geschweißt, gefügt, formschlüssig oder auf eine andere Art und Weise befestigt sein.

Im Gegensatz zu der in Fig. 2 und 3 dargestellten Befestigung des zweiten Endes 44 des Flansches 42 an dem oberen Abschnitt 16, kann das zweite Ende 44 des Flansches 42 auch am mittleren Abschnitt 24 oder unteren Abschnitt 20 angeordnet sein.

Anstatt der Thermoplatte 45 , der Schutzplatte 46 sowie der Federplatte 47 kann auch ein Deckel oder ein Tankgehäuse verwendet werden.

Obgleich das Gehäuse 10 eine erste Gehäuseöffnung 54 aufweist, um die Entlüftungsvorrichtung 12 in den Tank 32 einzuführen, ist es auch möglich, dass Gehäuse 10 derart auszugestalten, dass das Gehäuse 10 auf der der Thermoplatte 45 benachbarten Seite vollständig offen ist. Die Thermoplatte 45 bildet somit eine Fläche des Gehäuses 10 aus.

Der in Fig. 3a gezeigte Querschnitt der Zuführleitung 2 ist kleiner als der Querschnitt des oberen Abschnitts 16 des Rohrs 14, allerdings kann der Querschnitt der Zuführleitung 2 auch größer als der Querschnitt des oberen Abschnitts 16 des Rohrs 14 sein, was die Abdichtung des Gehäuses 10 im Bereich einer zweiten Gehäuseöffnung 54 vereinfacht.

Obwohl der Verschiebeabschnitt V der Zuführleitung 2 vollständig innerhalb des Gehäuses 10 liegt, kann er auch in einem Bereich außerhalb oder teilweise außerhalb des Gehäuses 10 liegen.

Obgleich der erste Schlitz 58 und der zweite Schlitz 62 kreuzweise ausgebildet sind, ist es darüber hinaus möglich, dass die elastischen Platten 56, 60 einfach oder mehrfach geschlitzt ausgebildet werden. Je häufiger jedoch die elastischen Platten 56, 60 geschlitzt werden, desto weicher bzw. instabiler werden die elastischen Platten 56, 60 und somit kann keine wirksame Abdichtung der Einfüllöffnung 48 sichergestellt werden.

Die elastischen Platten 56, 60 werden, wie in Fig. 5 dargestellt, unter Verwendung der Federplatte 47 befestigt; allerdings können die elastischen Platten 56, 60 auch geklebt, verrastet, gefügt sowie formschlüssig angeordnet werden.

Obwohl die elastischen Platten 56, 60 in Fig. 4 quadratisch dargestellt sind, können sie auch jede andere beliebige Form, wie z.B. kreisförmig, ovalförmig, rechteckig oder vieleckig, aufweisen.

Ferner ist es denkbar, dass Prallblech 66 in oder an dem Tank 32 angeordnet ist, so dass der Abstand von der Abgabeöffnung 22 zum Prallblech 64 wunschgemäß verändert werden kann.

Der obere Abschnitt 16, der mittlere Abschnitt 24 und der untere Abschnitt 20 können aus unterschiedlichen Materialien bestehen.

Der Verschiebemechanismus 34 kann über eine Steuerung unter Einsatz von Sensoren, Leitungen, Aktoren und dergleichen gesteuert werden. Beispielsweise kann in dem Tank 32 ein als Füllstandsmesser ausgebildeter Sensor über eine Leitung ein Signal an die Steuerung geben, die anschließend ihrerseits bestimmt zu welchem Zeitpunkt und welche Menge von einem nicht gezeigten Reservoirtank über die Zuführleitung 2 und Entlüftungsvorrichtung 12 an den Tank 32 befördert wird. Hierbei erhält der Verschiebemechanismus 34 von der Steuerung mehrere Signale um den Vorgang auszuführen.

### Bezugszeichenliste:

- 2: Zuführleitung
- 4: Granulat
- 6: Druckmedium
- 8: Verdrängtes Medium
- 10: Gehäuse
- 12: Entlüftungsvorrichtung
- 14: Rohr
- 16: Obere Abschnitt
- 18: Zuführöffnung
- 20: Untere Abschnitt
- 22: Abgabeöffnung
- 24: Mittlere Abschnitt
- 26: Druckmediumablassmittel
- 28: Sieb
- 30: Umfangsfläche
- 32: Tank
- 34: Verschiebemechanismus
- 36: Befestigungsmittel
- 38: Bolzen
- 40: Erstes Ende
- 42: Flansch
- 44: Zweites Ende
- 45: Thermoplatte
- 46: Schutzplatte
- 47: Federplatte
- 48: Einfüllöffnung
- 50: Erste Gehäuseöffnung
- 52: Abdeckung
- 54: Zweite Gehäuseöffnung
- 56: Erste elastische Platte
- 58: Ersten Schlitz
- 60: Zweite elastische Platte
- 62: Zweiten Schlitz

- 66: Prallblech
- 68: Austrittsöffnung
- 70: Filter
- 72: Umgebung
- 74: Innenraum
- A: Ausgangsposition
- B: Befüllposition
- G: Gravitationsrichtung
- M: Mittelachse
- T: Transportrichtung
- V: Verschiebeabschnitt

## Patentansprüche

1. Entlüftungsvorrichtung (12) **gekennzeichnet, durch**
ein Rohr (14) mit wenigstens einem oberen Abschnitt (16) mit einer Zuführöffnung (18) und einem Druckmediumablassmittel (26), einem unteren Abschnitt (20) mit einer Abgabeöffnung (22) und einem mittleren Abschnitt (24), der den oberen Abschnitt (16) mit dem unteren Abschnitt (20) verbindet;
wobei der obere Abschnitt (16) einen größeren Querschnitt aufweist als der untere Abschnitt (20).

2. Entlüftungsvorrichtung (12) nach Anspruch 1, **dadurch gekennzeichnet, dass** das Druckmediumablassmittel (26) wenigstens teilweise im oberen Abschnitt (16) in einer Umfangsfläche (30) des Rohrs (14) als Sieb (28) ausgebildet ist.

3. Entlüftungsvorrichtung (12) nach Anspruch 1 oder 2, **dadurch gekennzeichnet, dass**
eine in Transportrichtung (T) verlaufende Mittelachse (M) des Rohrs (14) im Wesentlichen parallel zu der Gravitationsrichtung (G) angeordnet ist.

4. Entlüftungsvorrichtung (12) nach einem der Ansprüche 1 bis 3, **dadurch gekennzeichnet, dass**
das Rohr (14) parallel zur Transportrichtung (T) bewegbar, insbesondere verschiebbar, angeordnet ist.

5. Entlüftungsvorrichtung (12) nach Anspruch 4, **dadurch gekennzeichnet, dass** der obere Abschnitt (16) an einer Zuführleitung (18) parallel zur Transportrichtung (T) verschiebbar angeordnet ist.

6. Entlüftungsvorrichtung (12) nach Anspruch 4 oder 5 **gekennzeichnet, durch**
einen Verschiebemechanismus (34), insbesondere einen Druckmittelzylinder, welcher das Rohr (14) parallel zur Transportrichtung (T) verschiebt.

7. Entlüftungsvorrichtung (12) nach einem der Ansprüche 1 bis 6, **dadurch gekennzeichnet, dass**
das Rohr (14) einen kreisförmigen Querschnitt aufweist.

8. Entlüftungsvorrichtung (12) nach einem der Ansprüche 1 bis 7, **dadurch gekennzeichnet, dass**
der untere Abschnitt (20) im Bereich der Abgabeöffnung (22) ein Prallblech (66) aufweist.

9. Entlüftungsvorrichtung (12) nach einem der Ansprüche 1 bis 8, **dadurch gekennzeichnet, dass**
der mittlere Abschnitt (24) sich trichterförmig verjüngt.

10. Anordnung einer Entlüftungsvorrichtung (12) nach einem der Ansprüche 1 bis 9 an einem Tank (32), **dadurch gekennzeichnet, dass**
der Tank (32) eine Abdeckfläche (Thermoplatte 45) mit einer Einfüllöffnung (48) im Bereich der Abdeckfläche (Thermoplatte 45) aufweist;
wobei die Entlüftungsvorrichtung (12) derart oberhalb der Abdeckfläche (Thermoplatte 45) positioniert ist, dass die Entlüftungsvorrichtung (12) durch die Einfüllöffnung (48) einführbar ist.

11. Anordnung einer Entlüftungsvorrichtung (12) an einem Tank (32) nach Anspruch 10, **dadurch gekennzeichnet, dass**
wenigstens eine erste elastische Platte (56) an der Einfüllöffnung (48) angeordnet ist;
wobei die elastische Platte (56) in der Fläche, insbesondere kreuzweise, geschlitzt ist.

12. Anordnung einer Entlüftungsvorrichtung (12) an einem Tank (32) nach Anspruch 11, **dadurch gekennzeichnet, dass**
oberhalb einer ersten elastischen Platte (56) eine zweite elastische Platte (60) derart angeordnet ist, dass ein, insbesondere kreuzweise, ausgebildeter Schlitz (62) der zweiten elastischen Platte (60) in Bezug auf dem, insbesondere kreuzweise, ausgebildeten Schlitz (58) der ersten elastischen Platte (56), um insbesondere 45 °, versetzt ist.

13. Anordnung einer Entlüftungsvorrichtung (12) an einem Tank (32) nach einem der Ansprüche 11 bis 12, **dadurch gekennzeichnet, dass**
der Verschiebemechanismus (34) an einem Gehäuse (10) angeordnet ist.

14. Anordnung einer Entlüftungsvorrichtung (12) an einem Tank (32) nach Anspruch 13, **dadurch gekennzeichnet, dass**
das Gehäuse (10) die Entlüftungsvorrichtung (12) umschließt;
wobei das Gehäuse (10) wenigstens eine Austrittsöffnung(68) mit einem Filter (70) aufweist.

15. Verfahren zum Zuführen eines Granulats (4) zu dem Tank (32) vermittels der Zuführleitung (2) und der Entlüftungsvorrichtung (12) nach einem der Ansprüche 1 bis 9 mit den Schritten:
- Verschieben des Rohrs (14) von der Ausgangsposition (A) in Transportrichtung (T) durch wenigstens eine mit einem kreuzweisen Schlitz (58, 62) ausgebildete elastische Platte (56, 60) vermittels eines ein Signal empfangenden Verschiebemechanismuses (34) in eine Befüllposition (B);
- Zuführen des mit Hilfe eines Druckmediums (6) beförderten Granulats (4) von der Zuführleitung (2) in die Entlüftungsvorrichtung (12), wobei sich das Granulat (4) im mittleren Abschnitt (24) durch die verjüngende Ausbildung derart staut, dass das Granulat (4) befördernde Druckmedium (6) einen derartigen Staudruck aufbaut, dass das Druckmedium (6) die Bewegungsrichtung umkehrt;
- Entweichen des nach Bewegungsumkehr strömende Druckmediums (6) aus dem Rohr (14) durch das im oberen Abschnitt (16) ausgebildete Druckmediumablassmittel (26);
- Abgabe des gestauten Granulats (4) durch Lösen des Granulats (4) auf der der Abgabeöffnung (22) zugewandten Seite aus dem Rohr (14) durch die in dem unteren Abschnitt (20) ausgebildete Abgabeöffnung (22) vermittels der Schwerkraft; und
- Verschieben des Rohrs (14) nach Zuführen des Granulats (4) von der Befüllposition (B) entgegen der Transportrichtung (T) vermittels eines ein Signal empfangenden Verschiebemechanismuses (34) in die Ausgangsposition (A).
